# EUROPEAN PATENT SPECIFICATION

(11) **EP 1 906 799 B1**
(45) Date of publication and mention of the grant of the patent: **02.03.2016**
(21) Application number: 06780165.4
(22) Date of filing: 21.07.2006
(51) Int. Cl.: A47J 31/40

(54) **A COFFEE MACHINE**
KAFFEEMASCHINE
MACHINE À CAFÉ TURC

(30) Priority: 25.07.2005 TR 200502934
(43) Date of publication of application: 09.04.2008
(73) Proprietor: Arçelik Anonim Sirketi, 34950 Istanbul (TR)
(72) Inventor: GOKSEL, Tanalp Arcelik Anonim Sirketi, Tuzla, 34950 Istanbul (TR); UTAS, Ilker Arcelik Anonim Sirketi, Tuzla, 34950 Istanbul (TR); SOZEN, Hakan Arcelik Anonim Sirketi, Tuzla, 34950 Istanbul (TR); COKCEKEN, Necati Arcelik Anonim Sirketi, Tuzla, 34950 Istanbul (TR)
(86) International application number: PCT/IB2006/052508
(87) International publication number: WO 2007/013013

(56) References cited:
- WO-A2-2004/069013
- DE-A1- 10 230 951
- GB-A- 238 789
- GB-A- 2 246 438
- GB-A- 2 373 579
- GR-A- 2001 100 013

## Description

The present invention relates to a coffee machine that prepares Turkish coffee.

In automatic coffee machines that prepare Turkish coffee in accordance with the customary taste, the desired amount of ground coffee, sugar and cold water are put in the cooking chamber or the coffeepot, the mixture is first stirred well then the boiling process is carried out in the cooking chamber with a heater. Since Turkish coffee has the characteristic of quickly foaming and overflowing during cooking, the foam has to be prevented from overflowing, and in order to prepare Turkish coffee in accordance with the traditional taste and consistency, just before reaching the boiling point, the rising of the foam has to be controlled and the heating process has to be ended. In state-of-the-art, there are devices that detect the level of the mixture and the foam height in the coffeepot, however, they are expensive.

In the Turkish Patent Application no. TR200300199 as well as in the patent disclosure of WO 2004/069013, in an automatic coffee machine that prepares Turkish coffee, the brewing process is started by adding water, sugar and coffee in the coffeepot, the rising of the mixture in the coffeepot and the rising of the foam that is formed is detected by an infrared sensor situated on the ceiling of the cooking chamber wherein the coffeepot is positioned. When the foam reaches a predetermined level, the heat energy delivered to the coffeepot is switched off.

In the Greek Patent no. GR1003987, in a coffee machine, the pot wherein water, coffee and sugar are added in, in which the preparation process is carried out by means of a heater, moves up and down by an elevator system driven by a motor and there is a mixer above the pot. At the beginning of the preparation, the pot is moved upwards to the highest level providing the mixer to touch the base of the pot. Following the addition of coffee and sugar into the pot, the mixer starts to mix the ingredients. And after the mixing process is completed, the pot is moved down so that the bottom part of the mixer stays a little inwards from the lip of the pot. When the coffee in the pot rises and the foam formed rises touching the mixer, the heat energy delivered to the pot is cutoff.

The aim of the present invention is the realization of a coffee machine for preparing Turkish coffee wherein overflowing is prevented during boiling in an efficient manner.

The coffee machine realized in order to attain the aim of the present invention is explicated in the first claim whereas the other features are explicated in the dependent claims.

In the coffee machine of the present invention, the coffeepot containing a liquid mixture formed by water, coffee and sugar is placed inside the cooking chamber and heated from the bottom to prepare the coffee. In order to maintain the desired taste and consistency and prevent overflowing during preparation the coffee in the coffeepot, level sensors that are integrated to the coffeepot are utilized for detecting the pre-boiling level and/or detecting the rising of the foam during boiling, and when the foam reaches a predetermined level, decides that boiling is over and cuts off the energy delivered to the heater.

The level sensor that detects the level of the liquid within the coffeepot is in the shape of a conductive wire or plate embedded in the side wall of the coffeepot wherein coffee is boiled and contacts the liquid within the coffeepot through contact tips that extend from the side wall of the coffeepot to the inner surface. The existence of the liquid is detected by means of the conductive characteristic of the liquid and the potential difference between the contact tips when the current is delivered. The conducting tips of the level sensor outside the coffeepot contact a connector situated in the cooking chamber and provide to deliver the signals received from the contact tips to an electronic card that evaluates these signals.

More than one level sensor can be integrated that detect the rising of the foam in the coffeepot and the level of the liquid before boiling starts.

The contact tips of the level sensor that extend into the inner surface of the coffeepot detect the foam reaching the limit height and determine the lowest and highest pre-boiling limit heights of the liquid in the coffeepot. If the pre-boiling level is out of limits, then boiling is not started, if the foam reaches the limit height during boiling, then the preparation process is ended.

The level sensors embedded in the side walls of the coffeepot are covered with an insulating material so that they can retain their conductive characteristic without being effected by the body of the coffeepot that is preferably made of a metal such as aluminium or the like or the mixture level sensors are embedded within the insulating material covering the inner surface of the coffeepot.

The coffee machine realized in order to attain the aim of the present invention is illustrated in the attached figures, where:

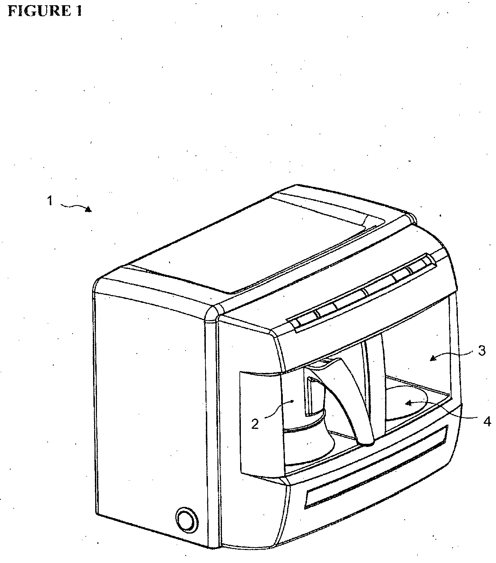

Figure 1 - is the perspective view of a coffee machine.

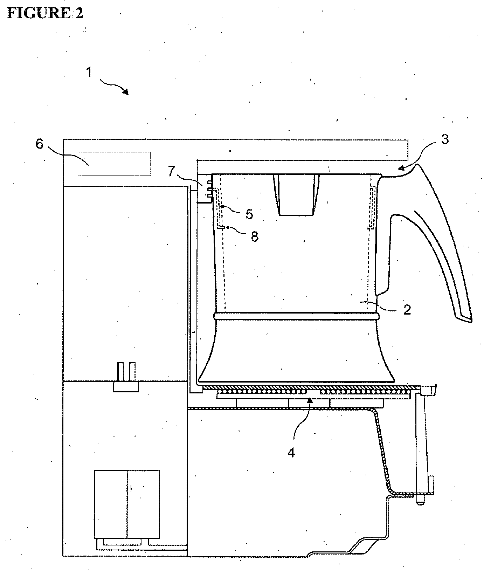

Figure 2 - is the schematic view of a coffee machine.

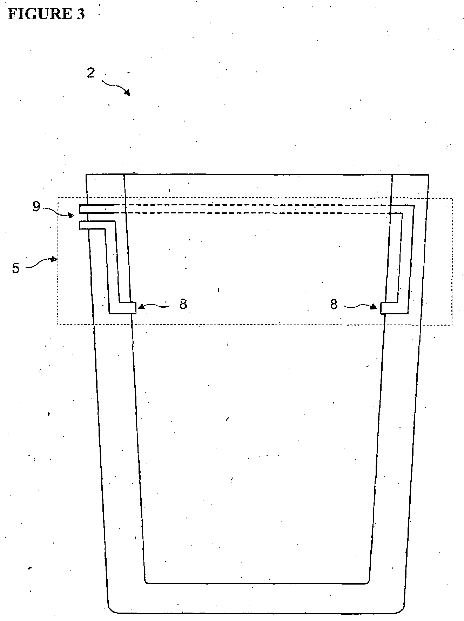

Figure 3 - is the schematic view of a coffeepot.
Figure 4 - is the top view of a coffeepot.
Figure 5 - is the A-A sectional view of a coffeepot.
Figure 6 - is the schematic view of a coffeepot situated in a cooking chamber.
Figure 7 - is the schematic view of detail D of a coffeepot.
Figure 8 - is the schematic view of detail D of a coffeepot in another embodiment of the present invention.

Elements shown in the figures are numbered as follows:
1. Coffee machine
2. Coffeepot
3. Cooking chamber
4. Heater
5., 15 , 25. Level sensor
6. Electronic card
7. Connector
8. Contact tip
9. Conduction tip

The coffee machine (1) comprises a demountable coffeepot (2) wherein ingredients such as water, coffee and sugar added in to form a liquid mixture and to carry out the boiling process, a cooking chamber (3) into which the coffeepot (2) is placed, a heater (4) that provides heating of the coffeepot (2) and one or more level sensors (5, 15, 25) integrated into the coffeepot (2) that detect the pre-boiling level of the liquid within the coffeepot (2) and/or detect the foam that forms during boiling, providing to make the decision that boiling is over, an electronic card (6) that evaluates the information received from the level sensors (5, 15, 25) for controlling the heater (4) and a connector (7) situated in the cooking chamber (3) that delivers the signals received from the level sensors (5, 15, 25) to the electronic card (6).

The level sensor (5,15,25) is positioned on the side wall of the coffeepot (2) via embedding. The level sensor (5, 15, 25) has the shape of a wire or plate with conductive properties, thinner than the side wall thickness of the coffeepot (2) and is integrated with the coffeepot by being covered with the material forming the coffeepot (2).

The level sensor (5, 15, 25) comprises more than one contact tip (8) that extend oppositely from the side wall of the coffeepot (2) to its inner surface, that contact the liquid within the coffeepot (2) providing to detect the existence of the liquid by means of the conductive characteristic of the liquid and the potential difference between them that is formed when the current is delivered, and more than one conduction tip (9) that extend out from the side wall or base of the coffeepot (2), contacting the connector (7) when the coffeepot (2) is placed in the cooking chamber (3), providing to deliver the signal received from the contact tips (8).

In one embodiment of the present invention, the coffee machine (1) comprises a foam level sensor (5) that detects the foaming of the liquid within the coffeepot (2) and gives the decision that boiling is over and prevents the foam from rising to overflow. In this embodiment, the contact tips (8) connected to the level sensor (5) are positioned oppositely on the side walls of the coffeepot (2) so as to correspond to the predetermined limit level of the foam height of the boiling and foaming liquid in the coffeepot (2). In this embodiment, when the foam contacts the contact tips (8), detecting the existence of the foam, signal is sent to the electronic card (6). If the foam contacts the contact tips (8), then the electronic card (6) gives the decision that boiling is over, cutting off the energy from the heater (4), ending the preparation process.

In another embodiment of the present invention, the coffee machine (1) comprises a top limit level sensor (25) that detects the pre-boiling level of the liquid in the coffeepot (2) and a low limit level sensor (15).

The contact tips (8) connected to the top limit level sensor (25) being lower than the contact tips (8) connected to the foam level sensor (5) are oppositely positioned on the side wall of the coffeepot (2) so as to correspond to the highest allowable pre-boiling level of the liquid in the coffeepot (2). In this embodiment, when the liquid mixture formed in the coffeepot (2) before boiling contacts the contact tips (8), the existence of the liquid is detected, sending signal to the electronic card (6) and the preparation process is not started. If the mixture does not contact the contact tips (8) before boiling, then the preparation process is started. Consequently premature boiling decisions by the electronic card (6) and overflowing are prevented.

The contact tips (8) connected to the low limit level sensor (15) being lower than the contact tips (8) connected to the top limit level sensor (25) are oppositely positioned on the side wall of the coffeepot (2) so as to correspond to the lowest allowable pre-boiling level of the liquid in the coffeepot (2). In this embodiment, when the liquid mixture formed in the coffeepot (2) before boiling contacts the contact tips (8), the existence of the liquid is detected, sending signal to the electronic card (6) and the preparation process is started. If the mixture does not contact the contact tips (8) before boiling, then the electronic card (6) does not start the preparation process. Consequently belated boiling decisions by the electronic card (6) and harming of the coffeepot (2) by being overheating are prevented.

If the pre-boiling level of the liquid in the coffeepot (2) is between the contact tips (8) connected to the low limit level sensor (15) and the top limit level sensor (25), then the electronic card (6) starts the boiling process, if not in between, then preparation is not started.

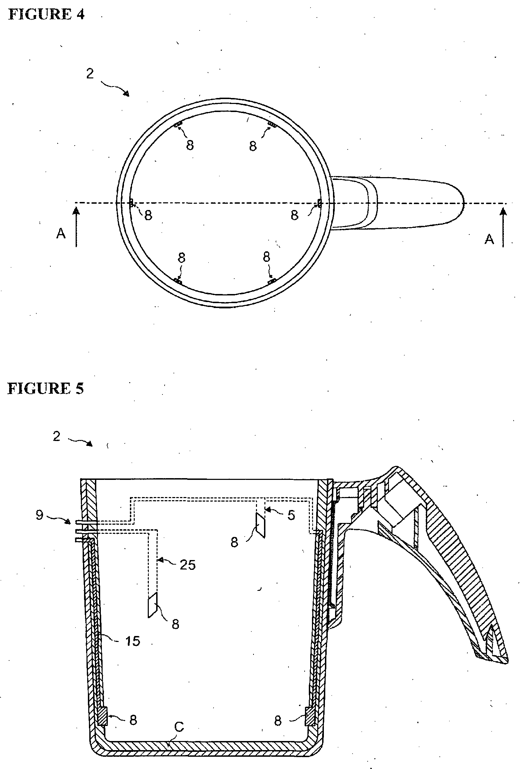

In one embodiment of the present invention, the coffeepot (2) is produced of metal and the inner surface is covered by a heat-resistant insulating material (C) (Figure 5, 6, 7). The level sensor (5) is embedded within the insulating material (C) and the contact tips (8) extend out of the insulating material (C) contacting the liquid.

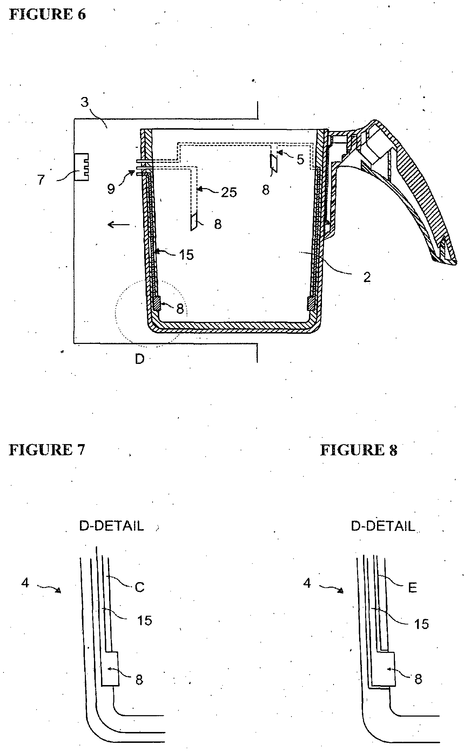

In another embodiment of the present invention, the level sensor (5) embedded in the side wall of the coffeepot (2) is covered by an insulating material (E) (Figure 8).

In another embodiment of the present invention, the connector (7) detects whether or not the coffeepot (2) is placed in the cooking chamber (3). Therefore utilization of a separate proximity sensor is not necessary.

In the coffee machine (1) of the present invention, the damaging of the coffeepot (2) is prevented by controlling the level of the prepared mixture in the coffeepot (2) before the preparation process, and if the level is less than desired or there is no mixture in the coffeepot (2) by not starting the preparation process. If the level of the prepared mixture in the coffeepot (2) is more than desired, the risk of overflowing is prevented again by not starting the preparation process. When foaming starts during the preparation process, heating of the coffeepot (2) is ended thus preventing the overflowing of the foam and ensuring the desired taste and consistency of the Turkish coffee.

## Claims

1. A coffee machine (1) comprising a coffeepot (2) into which ingredients such as water, coffee and sugar are added to form a liquid mixture and to carry out the boiling process, a cooking chamber (3) into which the coffeepot (2) is placed and a heater (4) that provides heating of the coffeepot (2), and **characterized by**
- one or more level sensors (5, 15, 25), integrated into the coffeepot (2) that detect the pre-boiling level of the liquid within the coffeepot (2) and/or detect the foam that forms during boiling to enable taking the decision that boiling is over, comprising more than one contact tip (8) extending oppositely from the side wall of the coffeepot (2) to the inner surface of the coffeepot (2), that contact the liquid within the coffeepot (2) providing to detect the existence of the liquid by means of the conductive characteristic of the liquid and the potential difference between them that is formed when the current is delivered,
- an electronic card (6) that controls the heater (4) by evaluating the information received from the level sensors (5, 15, 25) and
- a connector (7) situated in the cooking chamber (3) that delivers the signals received from the level sensors (5, 15, 25) to the electronic card (6) by means of the contact tips (8).

2. A coffee machine (1) as in Claim 1, **characterized by** the level sensor (5, 15, 25) having the shape of a conductive wire or plate, thinner than the side wall thickness of the coffeepot (2) and integrated with the coffeepot (2) by being covered with the material forming the coffeepot (2).

3. A coffee machine (1) as in Claim 1 or 2, **characterized by** the level sensor (5, 15, 25) comprising one or more conduction tips (9) that extend out from the side wall or base of the coffeepot (2), providing to deliver the signal received from the contact tips (8) when the coffeepot (2) is placed in the cooking chamber (3).

4. A coffee machine (1) as in any one of the above claims, **characterized by** a level sensor (5) comprising the contact tips (8) that are positioned oppositely on the side walls of the coffeepot (2) so as to correspond to a predetermined limit level of the foam height of the boiling and foaming liquid in the coffeepot (2), providing to give the decision that boiling is over by detecting the foaming of the liquid boiled in the coffeepot (2) and preventing the rising foam from overflowing.

5. A coffee machine (1) as in any one of the above claims, **characterized by** a top limit level sensor (25) comprising contact tips (8) being lower than the contact tips (8) connected to the foam 7351 limit level sensor (5) that are oppositely positioned on the side wall of the coffeepot (2) so as to correspond to the highest allowable pre-boiling level of the liquid in the coffeepot (2)

6. A coffee machine (1) as in any one of the above claims, **characterized by** a low limit level sensor (15) comprising contact tips (8) that are lower than the contact tips (8) connected to the top limit level sensor (25) that are oppositely positioned on the side wall of the coffeepot (2) so as to correspond to the lowest allowable pre-boiling level of the liquid in the coffeepot (2).

7. A coffee machine (1) as in Claim 3, **characterized by** the connector (7) that detects by means of the conduction tips (9) whether or not the coffeepot (2) is situated in the cooking chamber (3).

8. A coffee machine (1) as in any one of the above claims, **characterized by** the coffeepot (2), the inner surface of which is covered by an insulating material (C) and level sensors (5, 15, 25) situated inside the insulating material (C).

## Patentansprüche

1. Kaffeemaschine (1) umfassend eine Kaffeekanne (2), in die Zutaten wie Wasser, Kaffee und Zucker gegeben werden, um flüssiges Gemisch zu bilden und einen Aufkochvorgang auszuführen, eine Brühkammer (3), in der die Kaffeekanne (2) angeordnet ist, und eine Heizeinrichtung (4), die dafür sorgt, dass die Kaffeekanne (2) erwärmt wird, und **gekennzeichnet durch**
- einen oder mehrere Pegelsensoren (5, 15, 25), die in die Kaffeekanne (2) integriert sind und den Flüssigkeitspegel in der Kaffeekanne (2) vor dem Aufkochen erkennen und/oder den Schaum erkennen, der sich während des Aufkochens bildet, um zu bestimmen, ob das Aufkochen vorbei ist, umfassend mehrere Kontaktspitzen (8), die sich gegenüberliegend von der Seitenwand der Kaffeekanne (2) zur Innenfläche der Kaffeekanne (2) erstrecken und in Kontakt mit der Flüssigkeit in der Kaffeekanne (2) stehen, um das Vorliegen der Flüssigkeit mittels der Leiteigenschaft der Flüssigkeit und der Potenzialdifferenz zwischen ihnen zu erkennen, die entsteht, wenn Strom zugeführt wird,
- eine Elektronikkarte (6), die die Heizeinrichtung (4) steuert, indem sie die Informationen von den Pegelsensoren (5, 15, 25) auswertet, und
- einen Anschluss (7), der in der Brühkammer (3) angeordnet ist und die Signale von den Pegelsensoren (5, 15, 25) mithilfe der Kontaktspitzen (8) an die Elektronikkarte (6) leitet.

2. Kaffeemaschine (1) nach Anspruch 1, **dadurch gekennzeichnet, dass** der Pegelsensor (5, 15, 25) die Form eines Leiterdrahts oder einer leitenden Platte aufweist, dünner als die Seitenwanddicke der Kaffeekanne (2) und in die Kaffeekanne (2) integriert, indem er mit dem Material bedeckt ist, das die Kaffeekanne (2) bildet.

3. Kaffeemaschine (1) nach Anspruch 1 oder 2, **dadurch gekennzeichnet, dass** der Pegelsensor (5, 15, 25) eine oder mehrere leitende Spitzen (9) umfasst, die sich von der Seitenwand oder Basis der Kaffeekanne (2) nach außen erstrecken und dafür sorgen, dass das Signal von den Kontaktspitzen (8) geleitet wird, wenn die Kaffeekanne (2) in der Brühkammer (3) angeordnet ist.

4. Kaffeemaschine (1) nach einem der vorangehenden Ansprüche, **gekennzeichnet durch** einen Pegelsensor (5), der die Kontaktspitzen (8) umfasst, die gegenüberliegend an den Seitenwänden der Kaffeekanne (2) angeordnet sind, derart, dass sie einem vorgegebenen Grenzpegel der Schaumhöhe der kochenden und schäumenden Flüssigkeit in der Kaffeekanne (2) entsprechen und es ermöglichen, dass bestimmt wird, dass das Aufkochen vorbei ist, indem sie das Schäumen der in der Kaffeekanne (2) gekochten Flüssigkeit erkennen und verhindern, dass der ansteigende Schaum überläuft.

5. Kaffeemaschine (1) nach einem der vorangehenden Ansprüche, **gekennzeichnet durch** einen Obergrenzpegelsensor (25), umfassend Kontaktspitzen (8), die niedriger als die Kontaktspitzen (8) sind, die mit dem Schaumgrenzpegelsensor (5) sind, und gegenüberliegend an der Seitenwand der Kaffeekanne (2) angeordnet sind, derart, dass sie dem höchsten zulässigen Pegel der Flüssigkeit in der Kaffeekanne (2) vor dem Aufkochen entsprechen.

6. Kaffeemaschine (1) nach einem der vorangehenden Ansprüche, **gekennzeichnet durch** einen Untergrenzpegelsensor (15), umfassend Kontaktspitzen (8), die niedriger als die Kontaktspitzen (8) sind, die mit dem Obergrenzpegelsensor (25) sind, und gegenüberliegend an der Seitenwand der Kaffeekanne (2) angeordnet sind, derart, dass sie dem niedrigsten zulässigen Pegel der Flüssigkeit in der Kaffeekanne (2) vor dem Aufkochen entsprechen.

7. Kaffeemaschine (1) nach Anspruch 3, **dadurch gekennzeichnet, dass** der Anschluss (7) mithilfe der leitenden Spitzen (9) erkennt, ob die Kaffeekanne (2) in der Brühkammer (3) angeordnet ist.

8. Kaffeemaschine (1) nach einem der vorangehenden Ansprüche, **dadurch gekennzeichnet, dass** die Innenfläche der Kaffeekanne (2) mit einem Isoliermaterial (C) bedeckt ist und Pegelsensoren (5, 15, 25) im Inneren des Isoliermaterials (C) angeordnet sind.

## Revendications

1. Une machine à café (1) comprenant un pot de café (2) dans lequel les ingrédients tels que l'eau, le café et le sucre sont placés à faire un mélange liquide et à réaliser le processus d'ébullition, une chambre de cuisson (3) dans laquelle le pot de café (2) est placé et un dispositif de chauffage (4) qui permet le chauffage du pot de café (2) et **caractérisée par**
- un ou plusieurs capteurs de niveau (5, 15, 25) qui sont intégrés dans le pot de café (2), qui détectent le niveau de pré-ébullition du liquide dans le pot de café (2) et/ou détectent la mousse qui se forme lors de l'ébullition pour permettre la prise de la décision que l'ébullition est finie, comprenant plus d'un bout de contact (8) qui s'étend de manière opposée à partir de la paroi latérale du pot de café (2) à la surface intérieure du pot de café (2), qui contacte le liquide dans le pot de café (2), permettant la détection de l'existence du liquide par l'intermédiaire de la caractéristique conductrice du liquide et la différence potentielle entre eux, qui se forme lorsque le courant est délivré,
- une carte électronique (6) qui contrôle le dispositif de chauffage (4) en évaluant les informations reçues à partir des capteurs de niveau (5, 15, 25) et
- un connecteur (7) qui est situé dans la chambre de cuisson (3) et qui envoie les signaux reçus à partir des capteurs de niveau (5, 15, 25) à la carte électronique (6) au moyen des bouts de contact (8).

2. Une machine à café (1) selon la Revendication 1, **caractérisée par** le capteur de niveau (5, 15, 25) qui est en forme d'un fil ou une plaque conducteur/conductrice, plus mince que l'épaisseur de la paroi latérale du pot de café (2) et intégré avec le pot de café (2) en étant recouvert avec la matière formant le pot de café (2).

3. Une machine à café (1) selon la Revendication 1 ou 2, **caractérisée par** le capteur de niveau (5, 15, 25) comprenant un ou plusieurs bouts de conduction (9) qui s'étendent à partir de la paroi latérale ou la base du pot de café (2), permettant la transmission du signal reçu des bouts de contact (8) lorsque le pot de café (2) est placé dans la chambre de cuisson (3).

4. Une machine à café (1) selon l'une quelconque des revendications précédentes, **caractérisée par** un capteur de niveau (5) comprenant les bouts de contact (8) qui sont positionnés de manière opposées sur les parois latérales du pot de café (2) de manière à correspondre à un niveau limite prédéterminé de la hauteur de mousse du liquide, qui bout et mousse, dans le pot de café (2), assurant qu'il est décidé que l'ébullition est terminée en détectant la formation de mousse dans le liquide bouilli dans le pot de café (2) et empêchant la mousse montant de déborder.

5. Une machine à café (1) selon l'une quelconque des revendications précédentes, **caractérisée par** un capteur de niveau de limite supérieure (25) comprenant des bouts de contact (8) qui sont situés plus bas que les bouts de contact (8) reliés au capteur de niveau de limite de mousse (5) qui sont positionnés de manière opposée sur la paroi latérale du pot de café (2) de manière à correspondre au niveau de pré-ébullition admissible le plus élevé pour le liquide dans le pot de café (2).

6. Une machine à café (1) selon l'une quelconque des revendications précédentes, **caractérisée par** un capteur de niveau de limite inférieure (15) comprenant des bouts de contact (8) qui sont situés plus bas que les bouts de contact (8) reliés au capteur de niveau de limite supérieure (25) qui sont positionnés de manière opposée sur la paroi latérale du pot de café (2) de manière à correspondre au niveau de pré-ébullition admissible le plus bas pour le liquide dans le pot de café (2).

7. Une machine à café (1) selon la Revendication 3, **caractérisée par** le connecteur (7) qui détecte par l'intermédiaire des bouts de conduction (9) si ou non le pot de café (2) est situé dans la chambre de cuisson (3).

8. Une machine à café (1) selon l'une quelconque des revendications précédentes, **caractérisée par** le pot de café (2), dont la surface intérieure est recouverte d'un matériau isolant (C), et des capteurs de niveau (5, 15, 25) qui sont situés dans le matériau isolant (C).
